# EUROPEAN PATENT APPLICATION

(11) **EP 3 354 596 A1**
(43) Date of publication of application: **01.08.2018**
(21) Application number: 17202917.5
(22) Date of filing: 03.12.2014
(51) Int. Cl.: B65D 85/804

(54) **CAPSULE AND DEVICE FOR PREPARING BEVERAGES AND METHOD FOR PRODUCING CAPSULES**

(30) Priority: 03.12.2013 NL 2011887; 10.02.2014 NL 2012232; 21.07.2014 WO PCT/IB2014/063282
(62) Divisional of application: 14831061.8
(71) Applicant: Biserkon Holdings Ltd., 1307 Nicosia (CY)
(72) Inventor: ANDREAE, Jan, 1261 XE Blaricum (NL); KLEP, Mark Eric Anton Arthur, 4281 NJ Andel (NL); ZWEED, Sander Gordon, 1401 VJ Bussum (NL)
(74) Representative: Patentwerk B.V.

(57) **Abstract**

The invention relates to a capsule for use in a device for preparing beverages. The invention furthermore relates to a method for producing a capsule according to the invention. The invention also relates to an assembly of such a capsule and to a device for preparing beverages.

## Description

The invention relates to a capsule for use in a device for preparing beverages. The invention furthermore relates to a method for producing a capsule according to the invention. The invention also relates to an assembly of such a capsule and a device for preparing beverages.

From the prior art, various capsules for use in a device for preparing beverages are known. A known capsule, as is described, for example, in EP0512468, comprises a substantially frustoconical housing consisting of a peripheral wall, an end inlet side adjacent to the peripheral wall, and an engagement edge which is connected laterally with respect to the peripheral wall to the peripheral wall for clamping the capsule into a capsule holder of the device for preparing beverages. The engagement edge is connected to a perforatable film/foil which also forms the outlet side of the capsule. The housing is filled with a substance to be extracted, such as ground coffee beans. This known capsule can be placed in a device for preparing a beverage. To this end, the capsule is placed in a capsule holder which successively clamps the capsule, resulting in the inlet side of the capsule being perforated. Subsequently, heated water will be passed at relatively high pressure (6-20 bar) into the capsule holder and thus via the inlet side into the capsule, where the water will come into contact with the substance to form the final beverage. As a result of the pressure build-up in the capsule, the film/foil will bulge in such a manner that the film/foil will be perforated by the capsule holder, as a result of which the beverage produced can leave the capsule. The housing of the capsule described in the abovementioned patent is made of aluminium. Although aluminium has relatively good barrier properties for preserving coffee over a prolonged time, the processing of aluminium is relatively difficult. In addition, the capsule will be thrown away after use, usually as part of the general waste, which results in a considerable environmental load.

It is an object of the invention to provide a capsule for preparing beverages which, in particular after use, results in a reduced environmental load.

To this end, the invention provides a capsule of the type mentioned in the preamble, comprising: a substantially closed housing which is at least partly filled with a substance to be extracted and/or to be dissolved, such as ground coffee, for preparing a beverage, in which the housing is substantially closed, in which the housing is at least defined by a peripheral wall, an end side connected to the peripheral wall, and a laterally projecting engagement edge which is connected to the peripheral wall at a distance from the end side for enabling the capsule to be clamped in a capsule holder of a device for preparing beverages; and at least one substantially closed sealing element which is connected to the laterally projecting engagement edge for enclosing the substance in the capsule in a preserving manner, in which the capsule is substantially completely compostable, and in which the housing and/or the sealing element comprises at least one barrier layer, which barrier layer is at least partly, and preferably substantially, impermeable to oxygen, in which the housing preferably also comprises at least one material layer surrounding the barrier layer which completely protects the barrier layer from the atmosphere surrounding the capsule. By manufacturing the capsule from one or more (biologically) compostable materials, the capsule will be disposed of after use, preferably with the green waste (vegetable, fruit and garden waste), following which the capsule is molecularly decomposed in a biological manner by microorganisms, and optionally after supplying activation heat and moisture (water). In this case, it is also preferred if the capsule components are made of biomaterials ("biobased materials"), which are materials which originate from organisms which are alive or have been alive, further increasing the sustainability of the capsule and further reducing the environmental load. Organic molecules which substantially constitute the capsule are in this case converted into smaller organic molecules and eventually into water, carbon dioxide and biomass (humus), and possibly into mineral constituents, such as salts. In industrial composting installations, the complete composting process usually lasts a few weeks. Such a composting process is also referred to as biodegradation. Manufacturing all components of the capsule from completely compostable materials results in a significant environmental advantage. This offers a response to the permanent aim to keep the waste stream under control and to deal responsibly with residual waste. In addition to the lower environmental load which is associated with the capsule according to the invention, the substantially closed capsule is highly suitable for preserving the substance, usually coffee, over a prolonged period of time by using an oxygen barrier, preferably both in the housing and the sealing element. There is thus no need for a separate form of packaging to ensure the quality of the substance, in particular of the coffee.

The engagement edge is usually connected to an end of the peripheral wall which is facing away from the end side (bottom). This results in an asymmetrical capsule, where the plane of symmetry of the capsule is fixed by the peripheral edge (flange). Usually, the peripheral wall will have a substantially frustoconical design, so as to be able to use the capsule in known devices for preparing beverages. The housing is preferably substantially rigid (dimensionally stable). Regarding design, the capsule preferably corresponds to the capsule which is described in the abovementioned patent EP0512468.

As the at least one oxygen barrier used is generally particularly affected by moisture and will disintegrate relatively quickly and easily when it comes into contact with moisture (water), it is particularly advantageous if the oxygen barrier layer is surrounded (enclosed) by at least one protective material layer which completely protects the oxygen barrier layer from the (moist) atmosphere surrounding the capsule. The term surrounding atmosphere is understood to mean the ambient air which surrounds the capsule. The surrounding material layer is in this case made from a material which is relatively unaffected by moisture and is relatively stable in a moist environment, and will therefore not disintegrate or degrade easily upon coming into contact with moisture. Preferably, this material layer which protects the oxygen barrier layer and thus forms a protective material layer is not readily permeable to moisture, if at all, as a result of which the protective material layer functions as a kind of moisture barrier layer, so that moisture cannot quickly and easily come into contact, if at all, with the oxygen barrier layer which is situated behind and is sensitive to moisture. This leaves the oxygen barrier layer intact and preserves the capsule and its contents as such. In this case, it is important that the oxygen barrier layer is completely protected from the outside environment (the immediate surroundings), as leaving the moisture-sensitive oxygen barrier layer partly uncovered, as a result of which the oxygen barrier layer can come into contact with moist ambient air, already results in disintegration of eventually a substantial part of the oxygen barrier layer or even of the entire oxygen barrier layer, as a result of which the capsule contents would be exposed to moisture and oxygen in the immediate surroundings. At least one protective material layer is positioned at least on an outer side of the housing in order to act as a partition wall between the moisture-sensitive oxygen barrier layer and the immediate surroundings of the housing/capsule.

However, in addition, it is also conceivable to use at least one protective material layer on an inner side of the housing, as a result of which direct contact between coffee (or another substance contained in the capsule) and the oxygen barrier layer can also be prevented, which may further benefit the stability of the oxygen barrier layer. Preferably, the oxygen barrier layer will then be completely enclosed (surrounded) by one or more protective material layers. The at least one surrounding material layer usually also functions as a substantially dimensionally stable support layer (or substrate layer) for the - usually relatively thin-walled, soft - oxygen barrier layer.

Preferably, the housing is made from a laminate comprising several material layers, of which the at least one oxygen barrier layer and the at least one protective material layer surrounding the oxygen barrier layer form part. In this case, preferably each material layer is substantially compostable. By using a laminate of material layers, the housing can be given the desired properties in an efficient manner. The laminate layers may in this case be bonded to one another. However, it is preferred if the laminate layers are produced in a single manufacturing step by means of a co-injection process (injection-moulding), as a result of which the different material layers will be integrally connected to one another. It is conceivable for an outermost material layer to be provided with an additional material layer, in particular a coating, after and during manufacture of the capsule housing, which is substantially impermeable to moisture, in order to be able to protect the coffee (or another substance contained in the capsule) even better from moisture, and thus preserve it even more effectively. An example of a suitable material for this additional moisture-impermeable material layer (coating) are a cellulose, such as nitrocellulose, hydroxyethyl cellulose, or a polysaccharide, such as starch, which are also compostable as such. In the case of starch, it is advantageous to enrich the starch with gelatine and/or a fatty acid ester (E-471).

Preferably, the at least one material layer surrounding the oxygen barrier layer provides the housing with dimensional stability and strength. An example of suitable materials for this purpose are compostable polyesters, in particular a polylactic acid (PLA), preferably a polylactic acid in the amorphous state. In addition, PLA acts as a reasonable to good moisture barrier in order to be able to protect the oxygen barrier for a sufficiently long time - at least a few months - from ambient moisture. A polyester, and in particular PLA, is usually relatively stiff and dimensionally stable, even at a higher temperature of approximately 90°C to which the capsule is subjected when preparing a hot beverage, such as coffee. Although crystalline PLA is thermally more stable than amorphous PLA, it is preferable to use amorphous PLA, since amorphous PLA is more readily compostable than crystalline PLA, and a capsule based on amorphous PLA also meets the compostability standard EN13432 which specifies that a material has to have decomposed within 12 weeks by at least 90% into CO₂, water, and small mineral particles (smaller than 2 by 2 mm). Incidentally, a housing based on amorphous PLA will also be able to be made sufficiently strong by means of a sufficiently thick wall (0.3-0.6 mm) and/or the frustoconical design of the side wall and/or any additional reinforcement element in the transition region between the end side and the peripheral wall. Incidentally, amorphous PLA can be obtained during injection-moulding by cooling the PLA relatively quickly and to a sufficient degree to a temperature of approximately 40-50 degrees Celsius. The injection-moulding process is facilitated if PLA based on sugarcane and/or sugar beet is used, and these raw materials will also result in an improved capsule housing with a relatively high temperature resistance. The thermal stability of PLA can also be improved by using a racemic mixture of lactic acid during the production of polylactic acid, resulting in a poly-D/L-lactic acid. The thermal stability of the PLA (or an alternative polyester) can be improved further by the addition of one or more (inorganic) minerals to the PLA, as a result of which de facto a composite material is produced. Preferably, the material layer comprises between 85 and 100% by weight of polyester, in particular (amorphous) PLA. Such inorganic particles preferably consist of inorganic layered, fibrous or platelike particles, usually microparticles and/or nanoparticles, comprising natural or synthetic clay minerals, such as mica, kaolinite, vermiculite, halloysite, montmorillonite, zeolite, talc, and the like. In particular (compostable) silica (micro)fibres (SiO2), usually produced by means of sol-gel technology, are readily compostable and significantly reinforce the structure of the PLA. An advantageous amount of silica fibres in the material layer comprising PLA is between 0 and 15% by weight. Furthermore, it is advantageous if (compostable) talc is used in the material layer comprising PLA, since talc also has a lubricating effect which makes the housing less fragile and thus reinforces it. The talc content in this material layer is preferably between 0 and 15%. This material layer, which also acts as a sufficiently efficient moisture barrier, is preferably made of a compostable composite of (amorphous) PLA, silica fibres and talc, as described above, and preferably completely encloses the oxygen barrier. The total wall thickness of the housing, in particular formed by the thickness of this composite from which the housing is preferably made, is preferably between 0.3 and 0.6 millimetre. In this case, the side wall has a greater thickness, in particular in the order of magnitude of 0.5-0.6 mm, and in this case the end side and/or the engagement edge have a small wall thickness, in particular in the order of magnitude of 0.3 mm. A relatively thin-walled end side facilitates cutting of the end side by blades of a capsule holder of a device for preparing beverages when closing the capsule holder. A relatively thin-walled engagement edge facilitates clamping of the capsule at the location of the engagement edge. A relatively thick-walled side wall (peripheral wall) increases the dimensional stability and strength of the capsule. Incidentally, the oxygen barrier layer, being a relatively thin layer with a typical thickness of tens of microns, will be incorporated in the surrounding protective material layer or material layers.

The oxygen barrier may be made of various compostable materials and may, for example, at least partly be made of compostable synthetic or natural polymers, such as polyvinyl alcohol (PVOH) or biodegradable ethylene vinyl alcohol (EVOH), starch, polybutene terephthalate (PBT), thermoplastic copolyester (TPC), a TPC-based elastomer (TPE), biodegradable polyethylene (PE), biodegradable polypropylene (PP), biodegradable polybutylene (PB) and copolymers and mixtures thereof. At this moment, PVOH is most preferred as the base material due to its relatively good barrier properties to oxygen and the relatively good compostability. A further advantage of PVOH is the fact that this material bonds relatively well to a material layer comprising PLA without the use of a separate bonding agent. A drawback of PVOH is the water solubility of this material, due to which it is important to protect this material from ambient moisture, which is possible, for example, by using one or more of the abovementioned protective material layers. Another drawback of PVOH is the fact that it is relatively flammable and therefore particularly difficult to injection-mould at the usual injection-moulding temperatures of over 200 degrees Celsius. In this case, it is advantageous if the PVOH is mixed with an aliphatic polyol, preferably glycerol, which considerably facilitates injection-moulding. Preferably, the amount of PVOH (or a different oxygen-impermeable base material) is at least 50% by weight. Preferably, the amount of polyol, in particular glycerol (glycerine), is in this case between 10 and 50% by weight. Instead of glycerol, it is also possible to use PLA, polypropene carbonate (PPC) or another compostable polyester. From an aesthetic point of view, it is furthermore advantageous to provide the oxygen barrier layer with talc. Talc has a neutral, white colour and prevents the oxygen barrier layer from being too clearly visible to users through the usually slightly transparent surrounding material layer.

Where a compostable or biodegradable base material other than PVOH is used as base material for the oxygen barrier, it may be advantageous to increase the compostability or biodegradability of this alternative base material by adding one or more additives. An example of suitable biodegradable additives are a glutaric acid or a derivative thereof; a carboxylic acid compound having a chain length of 5-18 carbon atoms; a polymer; and a swelling agent. In addition, the additive may furthermore comprise one or more of the following constituents: a microbe which can chemically convert the polymer material, a positive chemotaxis substance for attracting microbes, metal particles which are susceptible to corrosion, colorants which activate decomposition, or a carrier resin. In a preferred embodiment, the carrier resin is selected from the group consisting of: polydivinyl benzene, ethylene vinyl acetate copolymers, maleic anhydride, acrylic acid with polyolefins. An alternative compostable additive comprises a mixture of a furanone compound, a glutaric acid, a hexadecanoic acid compound, a polycaprolactone polymer, organoleptic swelling agent (such as natural fibres, grown colloid, cyclodextrin, polylactic acid, etc.) and a carrier resin which facilitates the adding of the additive in the base material for the oxygen barrier, which benefits the compostability of the oxygen barrier.

If a TPC is used as oxygen barrier material, a TPC, or an elastomer based thereon, having the molecular formula -(A)ₘ-(B)ₙ-, in which m>1, n>1, and "A" stands for rigid polybutene terephthalate (PBT) segments, and "B" stands for longer chains of soft, amorphous polyether/polyester, such as for example poly(tetramethylene ether glycol) terephthalate is preferably used. By adjusting the ratio between "A" segments and "B" segments, the properties of the TPC can be changed. It is preferably 1-5% by weight, also if the sealing element comprises talc. The addition of talc also contributes to the flexibility of the sealing element.

A barrier layer against oxygen comprising one or more synthetic or natural polymers may furthermore comprise a crosslinking agent, such as silane, glyoxal, melamine resin and the like. Preferably, such a barrier layer against oxygen is made from compostable material and therefore natural polymers, such as starch, chitosan, and synthetic polymers, such as PVOH, are preferred. In an embodiment, the material layer furthermore comprises a wax and/or a filler, such as clay, which further increases the barrier function.

It is conceivable to use several oxygen barrier layers in the housing. These several oxygen barrier layers may be made from the same material. These several oxygen barrier layers may be made from different materials. These several oxygen barrier layers may abut one another, but may also be separated by one or more intermediate material layers. In a preferred embodiment, the housing comprises at least one moisture-sensitive oxygen barrier layer, for example made of PVOH, which is protected from the immediate surroundings by at least one covering material layer, at least one covering material layer of which is formed by a relatively moisture-resistant oxygen barrier, for example made of cellulose and/or TPC.

If desired, it is also possible to use a metallized film/foil as a barrier to oxygen and/or as a water (vapour) barrier. Preferably, an aluminium coating is applied to an already formed material layer of the laminate for this purpose. Generally though, this variant embodiment is not preferred as such a metal coating will usually compromise the compostability of the capsule. In addition, a capsule comprising metal is not expected to be perceived as being compostable by the end user.

A further material layer of the laminate may, if desired, function as protective coating and/or as coloured layer to provide the capsule with a desired colour. An example of such a layer is formed by a compostable polymer selected from the group consisting of compostable polyesters, PLA, polyhydroxyalkanoates, polycaprolactones, polybutylene succinate adipate, poly(butylene adipate co-terephthalate), PLA/caprolactone copolymers, biodegradable polyethylene and nitrocellulose. Another example of a protective coating is formed by biodegradable polyesters, biodegradable polyethylene, PLA and PLA derivatives.

The oxygen barrier layer preferably forms between 0 and 15% by weight of the housing. The at least one material layer surrounding the barrier layer preferably forms between 85 and 100% by weight. As has already been mentioned, the oxygen barrier layer is enclosed as a (thin) layer by the surrounding material layer or material layers. In this case, the surrounding material layer or material layers (together) form the inner wall and the outer wall of the housing and in doing so preferably completely enclose the oxygen barrier.

Preferably, all the abovementioned material layers are made of a compostable material. Often, the oxygen-impermeable barrier layer is sensitive to water, as a result of which it is preferred to protect this barrier layer from water (vapour) by enclosing the barrier layer with at least two surrounding (water-impermeable) material layers.

The laminate from which the housing of the capsule is made is preferably produced by co-injection of several laminate layers which are connected to one another during injection-moulding and thus form a composite. Preferably, this co-injection process takes place at an elevated temperature at which the laminate layers will be liquid, the mould, and thus the housing to be produced, being cooled relatively quickly and to a sufficient degree during/after injection, as a result of which at least one material layer, in particular a material layer substantially made of PLA, will assume an amorphous state. Research has shown that amorphous PLA is significantly more compostable than (semi)crystalline PLA. The stiffness of the amorphous PLA can be increased in an advantageous manner by adding one or more additives which increase stiffness. Additives which are suitable for this purpose are talc and, in particular, addition of (inorganic) fibres to the PLA. The talc usually also improves the heat resistance of the housing. Examples of suitable fibres are fibres made of silica, alumina-borate oxide and titanium oxide.

The capsule preferably comprises a substantially compostable sealing element which is preferably connected to the engagement edge and is configured to substantially seal a space between the capsule and a device for preparing beverages while the capsule is clamped in the device. This compostable sealing element which is preferably formed by a sealing ring is preferably made of polyester, more preferably from a(n) (amorphous) polylactic acid (PLA). This amorphous structure may, for example, be obtained by injection-moulding the PLA at relatively low temperatures of between 20 and 40°C, preferably of between 25 and 30°C. At this low processing temperature, the PLA does not have the opportunity to crystallize, resulting in an amorphous state. However, if the temperature is increased (to above 55-60°C), for example during regular use of the capsule, the amorphous state of the PLA will be crystallized in part, resulting in a semicrystalline state. This process is also referred to as "cold crystallization". At this elevated temperature of the crystallizing PLA, the PLA becomes rubbery, with the molecular tension decreasing and relaxation occurring. After cooling of the capsule, following use, the semicrystalline state of PLA in the sealing element, which becomes hard and stiff at lower temperature, will continue, significantly facilitating the subsequent ejection of the capsule from a capsule holder. The sealing element is preferably also with at least one additive, in particular reinforcing (inorganic) fibres and/or talc, in order to improve the strength of the sealing element. It is also advantageous if the (annular) sealing element is at least partly made of an elastomer based on compostable thermoplastic copolyester (TPC) in order to provide more flexibility for the sealing element, which may benefit the sealing capacity of the sealing element. Usually, the sealing element comprises between 80 and 90% by weight of PLA. Preferably, the sealing element comprises between 10 and 20% by weight of TPC. A suitable TPC is a polymer having the molecular formula -(A)ₘ-(B)ₙ-, in which m>1, n>1, and "A" is formed by rigid polybutene terephthalate (PBT) segments, and "B" is formed by longer chains of soft, amorphous polyether/polyester, such as for example poly(tetramethylene ether glycol terephthalate). By adjusting the ratio of "A" segments and "B" segments, it is possible to change the properties of the TPC. If the sealing element comprises talc, it is also preferably 1-5% by weight. The addition of talc also contributes to the flexibility of the sealing element.

Preferably, the sealing element is at least partly fused together with the engagement edge. This is usually achieved by means of welding, preferably by means of ultrasonic welding. Due to the fact that the contact surfaces of the engagement edge and the sealing element are usually made of substantially the same material, in particular PLA, a relatively strong connection can be produced by fusion. This makes it possible to make the capsule from components which are successively attached to one another to form the ultimate capsule, which usually benefits the manufacturing process and in particular the design and functionality of components. The weld seam (or fusion seam) preferably runs completely around the (peripheral wall of the) housing, as a result of which leaks between the engagement edge and the sealing element can be prevented. It is advantageous if an outer edge of the sealing element is connected to the engagement edge, while an inner edge of the sealing element is not connected to the engagement edge. This improves the flexibility of the (annular) sealing element. In this case, it is conceivable that the width of the outer edge of the sealing element is substantially equal to the width of the inner edge of the sealing element. A part of the sealing element, including for example (inter alia) the inner edge of the sealing element, is preferably situated at a distance from the engagement edge. As a result thereof, gaps or air chambers are formed between the engagement edge and the sealing element, which also benefits the flexibility of the sealing element. In a preferred embodiment, the annular sealing element has a width which substantially corresponds to the width of the engagement edge.

It is advantageous if the sealing element increases the effective diameter of the capsule. This makes it possible to use a standardized housing, while the capsule holder determines the dimensioning of the sealing element, which can be adapted more easily. In such an orientation, an (outer) part of the sealing element encloses a peripheral side of the engagement edge. Another part of the sealing element will in this case usually be positioned above the engagement edge. An inner peripheral edge of the usually annular sealing element is generally not connected and is situated at a distance from the engagement edge. This facilitates the folding (deforming) of the sealing element during clamping in the capsule holder, which benefits the sealing effect.

The annular sealing element is usually produced separately and is fitted around the housing and attached to the engagement edge after production. The sealing element may be marketed separately. The technical features related to the sealing element may be applied completely independently of the properties and technical features of the housing. However, it is usually preferred for the sealing element and the housing of the capsule to be made from the same base material in order to be able to weld both components to one another. The housing may also be marketed separately, optionally in the filled state, and assembled with the sealing element after transportation.

The material layers of the laminate are preferably welded to one another or glued to one another by means of a substantially completely compostable adhesive. An example of a compostable adhesive is an adhesive which comprises 1 to 70% by weight of compostable polymer, selected from the group consisting of: an aliphatic or partly aromatic polyester and a thermoplastic aliphatic polyester urethane. Another example of a compostable adhesive is formed by biodegradable acryl polymers, biodegradable polyesters, PLA, polyhydroxyalkanoates, polycaprolactones, polybutylene succinate adipate, poly(butylene adipate-co-terephthalate), PLA/caprolactone copolymers, starch, hydrocarbon resins and, of course, pine resin. Preferably, the compostable adhesive comprises a biodegradable acryl polymer or a polycaprolactone-based hot-melt adhesive.

If desired, the compostable adhesive furthermore comprises a tackifying agent, such as a resin. Such a tackifying agent preferably comprises a vegetable resin, such as a rosin and phenolic resin, a terpene polymer, such as a terpene phenolic resin and aromatic modified terpene resin, a styrene resin, coumarone/indene resin, an alkyl phenolic resin, a xylene resin, a C5-type petroleum resin, a C9-type petroleum resin and an alicyclic hydrogenated resin. Preferably, the tackifying agent comprises a vegetable resin, such as a rosin, and/or a terpene polymer, since such tackifying agents have a good adhesiveness in combination with the compostable polymer present in the compostable adhesive.

It is conceivable for the oxygen-impermeable barrier layer to also be substantially impermeable to water vapour, as a result of which the barrier layer can protect the substance in the capsule from contact with ambient moisture and ambient oxygen.

The capsule is preferably made of a compostable biobased material, such as biodegradable biopolymers, (recycled) paper and/or cardboard and synthetic biodegradable polymers. Biodegradable polymers preferably comprise biodegradable polyesters, PLA, polyhydroxyalkanoates, polycaprolactones, polybutylene succinate adipate, polybutylene adipate co-terephthalate, PLA/caprolactone copolymers, biodegradable polyethylene and nitrocellulose. PLA may comprise both the L-enantiomer (PLLA homopolymer) and the D-enantiomer (PDLA homopolymer).

In particular, the capsule is preferably made from a biobased polymer (biopolymer). These are materials which are made from biorenewable (recyclable) raw materials. This thus relates to the origin of the materials. Examples are bioplastics, a term which is used to denote plastics which are made from natural products, such as starch obtained from potatoes or maize, or from cellulose. They are in fact synthetic biopolymers. Biopolymers may be selected from carbohydrates, polysaccharides (for example cellulose, starch, glycogen, hemicellulose, chitin, fructan inulin, lignin and/or pectin substances), gums, proteins, optionally cereals, vegetable and/or animal proteins (such as gluten, whey proteins, and/or gelatin), colloids (such as hydrocolloid, for example natural hydrocolloid, such as gums), other polyorganic acids (such as PLA, polyglycolide and polyhydroxyalkanoate (PHA)), mixtures and/or modified derivatives thereof.

The biobased materials can be renewed (recycled) after use, but may also be composted. As has already been indicated above, composting consists of microbiologically decomposing the materials from which the capsule is made in a relatively short period of time into at least water, carbon and biomass (humus), and optionally methane. In this case, materials are preferably used, in particular polymers, which are decomposed in at most 12 weeks under strict conditions (regarding temperature, moisture and time and the like) into water, carbon dioxide, biomass and methane. These polymers meet EN13432, an international standard for compostable polymers. This standard defines both the test programme and the evaluation criteria which compostable packaging has to meet, such as the speed at which and the degree to which a biodegradable polymer has to decompose under commercial composting conditions. Whether a polymer product is compostable depends partly on the product geometry and any additives, such as for example talc, compostable plasticizers, including glycerine, and/or compostable fillers, including starch.

If desired, the capsule is made of cellulose, such as reclaimed cellulose, cellophane and/or cellulose diacetate. If the housing and/or the sealing element is at least partly made from cellulose, the type of cellulose used needs to be able to withstand relatively high temperatures just below the boiling point of water. Therefore, the capsule is preferably made of a compound comprising at least 20 to 90% by weight of cellulose ester, in which the percentage by weight has been calculated with respect to the weight of the total compound, at least 15 to 50% by weight (m/m) of plasticizer, in which the percentage by weight has been calculated with respect to the weight of cellulose ester which is present in the compound, and at least 5 to 70% by weight of inorganic filler, in which the percentage by weight has been calculated with respect to the weight of the total compound.

The plasticizers are preferably selected from the group comprising glycerine, triacetine, triethylene glycol, triphenyl phosphate, polyethylene glycol, propylene glycol, ethyl lactate, methyl lactate, glycerol triacetate, acetyl tributyl citrate, triethyl citrate, diethyl citrate, glycerol acetate, phthalate, sorbitol, maltitol, xylitol, erythritol, fatty acid ester or mixtures thereof. Preferably, the filler comprises silicate, such as talc.

Preferably, the capsule, that is to say the housing and/or the sealing element, is at least partly made of polylactic acid or a derivative thereof. The polylactic acid may optionally be mixed with starch in order to improve the speed with which the material decomposes. If necessary, the layer consisting of polylactic acid comprises approximately 2% (m/m) to approximately 20% (m/m) of starch. In a variant embodiment, the polylactic acid furthermore comprises a transition metal stearate, such as a stearate salt of aluminium, antimony, barium, bismuth, cadmium, cerium, chromium, cobalt, copper, gallium, iron, lanthanum, lead, lithium, magnesium, mercury, molybdenum, nickel, potassium, rare earth metals, silver, sodium, strontium, tin, tungsten, vanadium, yttrium, zinc and zirconium. If desired, the layer consisting of polylactic acid comprises approximately 0.5% (m/m) to approximately 5% (m/m) of metal stearate.

If the housing and/or the sealing element is at least partly made of polylactic acid, the polylactic acid has to be able to withstand relatively high temperatures of just below the boiling point of water. However, a pure polylactic acid will usually not be suitable for use due to the relatively low glass transition temperature (Tg) of 50° C. In addition, polylactic acids, in particular homopolymers PDLA and PLLA, have a relatively low speed of crystallization which is usually too low to achieve a sufficient degree of crystallization during production of the respective component(s).

It is therefore advantageous if the material used is a liquid polylactic acid compound, which compound consists to at least 94% (m/m) of acid components. It has been found that such a liquid polylactic acid compound does not crystallize above a temperature of 10°C. Such a liquid polylactic acid compound can therefore be used to form a polylactic acid material layer which can withstand relatively high temperatures just below the boiling point of water. Preferably, the compound comprises a total concentration of acid components of at least 95% (m/m), more preferably the concentration of acid components is at least 96% (m/m), 97% (m/m), 98% (m/m), 99% (m/m). Particularly advantageous properties are obtained if the liquid polylactic acid compound comprises a total concentration of acid components of 100% (m/m).
It has also been found that it is advantageous if the material used has a composition comprising: a compostable resin of PLLA with a limited fraction (≤5 mol%) of PDLA, enriched with at least one nucleating agent. Preferably, the nucleating agent comprises a combination of (i) preferably between 0 and 25% by weight of inorganic nucleating agent, preferably talc, and (ii) preferably between 0 and 30% by weight of inorganic filler, preferably having a lamellar structure, preferably a clay mineral, in particular an aluminium mineral, such as kaolin.
The housing and the sealing element may be made of substantially the same material or have a substantially identical material composition. In this case, the common main constituent is preferably formed by PLA. Optionally, the PLA may be enriched location-specifically with one or more additives in order to regulate, for example, the heat resistance and/or the modulus of elasticity. An additional advantage of using the same polymer for the housing and the sealing element is the fact that both components can be welded to one another, so that no adhesive is required.

Preferably, the sealing element is formed by a substantially completely compostable film/foil. This film/foil may consist of one material layer or a laminate of several material layers which are preferably mutually connected. In this case as well, one of the material layers may be an oxygen-impermeable barrier. Often, this barrier will also be enclosed by water-impermeable layers to protect the aforementioned oxygen barrier. In this way, the film/foil will be given both oxygen-impermeable and water (vapour)-impermeable properties. A material layer of the film/foil which faces the housing can preferably (at elevated temperature) be welded and/or glued to the housing. The sealing element may also be designed differently and may also consist of several elements, including for example the combination of a (compostable) film/foil and a (compostable) perforation plate which forms part of the capsule. An example thereof is mentioned in the international patent applications WO2011/159162A1 and WO2011/159163A1, the contents of which are deemed to form part of the contents of the present patent by way of reference.

The invention also relates to a housing for use in a capsule according to the invention.

The invention furthermore relates to an annular sealing element for use in a capsule according to the invention. The sealing element is in this case preferably at least partly made of at least one compostable polyester, in particular a(n) (amorphous) polylactic acid (PLA), preferably 80-90% by weight. More preferably, the sealing element also comprises an elastomer based on compostable thermoplastic copolyester (TPC) (also referred to as TPE of TPC-ET), preferably 10-20% by weight. Usually, the PLA and the TPC will be used as composite material. An example of a suitable TPC has already been mentioned above. Optionally, talc may be added to the aforementioned composite in order to increase the flexibility of the sealing element, preferably in a percentage by weight of 1-5%. Optionally, further additives such as (compostable) colorants and one or more anti-sticking additives are added to the sealing element.
The invention also relates to a method for producing a capsule for preparing beverages, in particular a capsule according to the invention, comprising the following steps: A) manufacturing a housing of the capsule from at least one compostable material, in which the housing is substantially closed, in which the housing is at least defined by a peripheral wall, an end side connected to the peripheral wall and a laterally projecting engagement edge which is connected to the peripheral wall at a distance from the end side for clamping the capsule in a capsule holder of a device for preparing beverages; B) manufacturing a sealing element from at least one compostable material, C) at least partly filling the housing with a substance to be extracted and/or dissolved, such as ground coffee, for preparing a beverage; and D) attaching the sealing element to the housing in such a way that the substance is enclosed in the capsule in a substantially airtight manner, in which the housing and/or the sealing element comprises at least one barrier layer, which barrier layer is substantially impermeable to oxygen. In this case, the housing preferably also comprises at least one material layer surrounding the barrier layer, in which the at least one surrounding material completely protects the barrier layer from the atmosphere surrounding the capsule. Preferably, the housing is manufactured in step A) by means of co-injecting in a mould at least one liquefied compostable material to form the at least one oxygen barrier layer, and at least one liquefied compostable material to form the at least one material layer surrounding the barrier layer, following which the housing is cooled to a temperature below the lowest melting temperature of the materials. More preferably, during manufacture of the housing by means of co-injection in step A), the oxygen barrier layer is completely surrounded (enclosed/enveloped) by at least one surrounding material layer. Usually, injection of different materials in the mould is carried out in succession, so that a material layer which has already been injected can cool down sufficiently to become dimensionally stable before one or more subsequent material layers are injected into the mould. Instead of by co-injection, the housing may also be formed by means of thermoforming, usually a laminate which has been manufactured by co-extrusion.

In addition, the invention relates to an assembly of a capsule according to, and a device for preparing beverages, which device comprises a capsule holder for receiving the capsule. In this case, the capsule holder will usually comprise several holder parts which are displaceable with respect to one another between an open position, in which the capsule can be placed in the capsule holder, and a closed position, in which the engagement edge and the sealing element of the capsule are clamped in a substantially liquid-tight manner by the holder parts.

The invention furthermore relates to the use of a capsule according to the invention in a device for preparing beverages.

Preferred features of the invention are set out in the following clauses:
1. Capsule for preparing beverages, comprising:
   - a substantially closed housing which is at least partly filled with a substance to be extracted and/or to be dissolved, such as ground coffee, for preparing a beverage, in which the housing is substantially closed, in which the housing is at least defined by a peripheral wall, an end side connected to the peripheral wall, and a laterally projecting engagement edge which is connected to the peripheral wall at a distance from the end side for enabling the capsule to be clamped in a capsule holder of a device for preparing beverages; and
   - at least one substantially closed sealing element which is connected to the laterally projecting engagement edge for enclosing the substance in the capsule in a preserving manner,
   in which the capsule is substantially completely compostable, and in which the housing comprises at least one barrier layer, which barrier layer is substantially impermeable to oxygen, and in which the housing comprises at least one material layer surrounding the barrier layer, in which the at least one surrounding material completely protects the barrier layer from the atmosphere surrounding the capsule.
2. Capsule according to clause 1, in which the engagement edge is connected to an end of the peripheral wall which is facing away from the end side.
3. Capsule according to clause 1 or 2, in which the peripheral wall has a substantially frustoconical design.
4. Capsule according to one of the preceding clauses, in which the housing is substantially rigid.
5. Capsule according to one of the preceding clauses, in which the oxygen barrier layer and the at least one material layer surrounding the oxygen barrier layer are laminated to one another.
6. Capsule according to one of the preceding clauses, in which the at least one material layer surrounding the oxygen barrier layer forms a moisture barrier.
7. Capsule according to clause 6, in which the barrier layer is preferably completely enclosed by at least two surrounding material layers.
8. Capsule according to clauses 6 and 7, in which the laminate comprises at least one oxygen-impermeable barrier layer which is enclosed by at least material layers, at least one material layer of which is substantially water-impermeable.
9. Capsule according to one of clauses 5-8, in which the laminate is manufactured by means of co-injection.
10. Capsule according to one of clauses 5-9, in which the material layers are glued to one another by using a substantially completely compostable adhesive.
11. Capsule according to one of the preceding clauses, in which the housing is at least partly made from at least one compostable polyester, in particular a polylactic acid (PLA), preferably an amorphous polylactic acid (PLA).
12. Capsule according to clause 11, in which the at least one material layer surrounding the oxygen barrier is substantially made from an amorphous polylactic acid (PLA).
13. Capsule according to clause 11 or 12, in which the at least one material layer surrounding the oxygen barrier comprises at least 85% by weight of compostable polyester, in particular of a polylactic acid (PLA).
14. Capsule according to clause 11 or 12, in which the amorphous polylactic acid is enriched with at least one additive.
15. Capsule according to clause 13, in which the amorphous polylactic acid is provided with reinforcing fibres, in particular silica fibres.
16. Capsule according to clause 13 or 14, in which the amorphous polylactic acid is enriched with talc.
17. Capsule according to one of clauses 11-15, in which the polylactic acid is made from sugarcane and/or sugar beet.
18. Capsule according to one of clauses 11-16, in which the polylactic acid is composed of a racemic mixture of lactic acid.
19. Capsule according to one of the preceding clauses, in which the oxygen barrier layer is at least partly made of a material which is substantially impermeable to oxygen selected from the group consisting of: polyvinyl alcohol (PVOH), polypropylene carbonate (PPC), compostable ethylene vinyl alcohol (EVOH), polybutene terephthalate (PBT), thermoplastic copolyester (TPC), a TPC-based elastomer (TPE), starch, a starch derivative or a combination of the aforementioned materials.
20. Capsule according to clause 19, in which the oxygen barrier layer comprises at least 70% by weight of a material which is substantially impermeable to oxygen.
21. Capsule according to one of the preceding clauses, in which the oxygen barrier layer is at least partly made from an aliphatic polyol, in particular from glycerol.
22. Capsule according to clause 21, in which the oxygen barrier layer comprises at most 20% by weight of aliphatic polyol, in particular glycerol.
23. Capsule according to one of the preceding clauses, in which the oxygen barrier layer is enriched with talc.
24. Capsule according to one of the preceding clauses, in which the oxygen barrier layer forms between 0 and 15% by weight of the housing and/or the at least one material layer surrounding the barrier layer forms between 85 and 100% by weight of the housing.
25. Capsule according to one of the preceding clauses, in which the wall thickness of the housing is between 0.3 and 0.6 millimetres.
26. Capsule according to one of the preceding clauses, in which the wall thickness of the peripheral wall of the housing is greater than the wall thickness of the engagement edge of the housing.
27. Capsule according to one of the preceding clauses, in which the wall thickness of the peripheral wall of the housing is greater than the wall thickness of the end side of the housing.
28. Capsule according to clause 25 and clause 26 or 27, in which the total wall thickness of the peripheral wall is between 0.4 and 0.6 millimetre, and the wall thickness of the engagement edge and/or the end side is between 0.3 and 0.4 millimetres.
29. Capsule according to one of the preceding clauses, in which the layer thickness of the oxygen barrier layer is smaller than the layer thickness of at least one material layer surrounding the oxygen barrier layer.
30. Capsule according to one of the preceding clauses, in which the capsule comprises a substantially compostable substantially annular sealing element which is preferably attached to the engagement edge and configured to substantially seal a space between the capsule and a device for preparing beverages while the capsule is clamped in the device.
31. Capsule according to clause 30, in which the sealing element is at least partly made from at least one compostable polyester, in particular a polylactic acid (PLA).
32. Capsule according to clause 31, in which the sealing element is at least partly made from an amorphous polylactic acid (PLA).
33. Capsule according to clause 31 or 32, in which the sealing element is at least partly made from a composite material which comprises (i) at least one compostable polyester, in particular a polylactic acid (PLA), preferably an amorphous polylactic acid (PLA), and (ii) at least one elastomer based on thermoplastic copolyester (TPC).
34. Capsule according to clause 33, in which the composite material comprises talc.
35. Capsule according to one of clauses 30-34, in which at least a part of the sealing element is fused with the engagement edge.
36. Capsule according to one of clauses 35, in which only an outer edge of the sealing element is fused with the engagement edge, and in which an inner edge is not directly connected to the sealing element.
37. Capsule according to clause 36, in which the width of the outer edge of the sealing element is substantially equal to the width of the inner edge of the sealing element.
38. Capsule according to one of clauses 35-37, in which a part of the sealing element is situated at a distance from the engagement edge.
39. Capsule according to one of clauses 30-38, in which the width of the sealing element substantially corresponds to the width of the engagement edge.
40. Capsule according to one of clauses 30-37, in which the sealing element increases the effective diameter of the capsule.
41. Capsule according to one of the preceding clauses, in which the capsule is at least partly made from at least one biobased material.
42. Capsule according to one of the preceding clauses, in which the sealing element is formed by a substantially completely compostable film/foil.
43. Capsule according to one of the preceding clauses, in which the sealing element is glued to the housing by using a substantially completely compostable adhesive.
44. Capsule according to clause 43, in which the adhesive comprises 1 to 70% by weight of compostable polymer, selected from the group consisting of: an aliphatic or partly aromatic polyester, and a thermoplastic aliphatic polyester urethane.
45. Capsule according to one of the preceding clauses, in which the capsule housing is at least partly made from cellulose.
46. Housing for use in a capsule according to one of clauses 1-45.
47. Annular sealing element for use in a capsule according to one of clauses 30-40.
48. Method for producing a capsule for preparing beverages, in particular a capsule according to one of clauses 1-45, comprising the following steps:
   A) manufacturing a housing of the capsule from at least one compostable material, in which the housing is substantially closed, in which the housing is at least defined by a peripheral wall, an end side connected to the peripheral wall and a laterally projecting engagement edge which is connected to the peripheral wall at a distance from the end side for clamping the capsule in a capsule holder of a device for preparing beverages;
   B) manufacturing a sealing element from at least one compostable material,
   C) at least partly filling the housing with a substance to be extracted and/or dissolved, such as ground coffee, for preparing a beverage; and
   D) attaching the sealing element to the housing in such a way that the substance is enclosed in the capsule in a substantially airtight manner,
   in which the housing comprises at least one barrier layer, which barrier layer is substantially impermeable to oxygen, and in which the housing comprises at least one material layer surrounding the barrier layer, in which the at least one surrounding material completely protects the barrier layer from the atmosphere surrounding the capsule.
49. Method according to clause 48, in which the housing is manufactured in step A) by means of co-injecting in a mould at least one liquefied compostable material in order to form the at least one oxygen barrier layer, and at least one liquefied compostable material in order to form the at least one material layer surrounding the barrier layer, following which the housing is cooled to a temperature below the lowest melting temperature of the materials.
50. Method according to clause 49, in which, during manufacture of the housing by means of co-injection in step A), the oxygen barrier layer is completely enclosed by at least one surrounding material layer.
51. Assembly of a capsule according to one of clauses 1-45, and a device for preparing beverages, which device comprises a capsule holder for receiving the capsule.
52. Assembly according to clause 51, in which the capsule holder comprises several holder parts which are displaceable with respect to one another between an open position, in which the capsule can be placed in the capsule holder, and a closed position, in which the engagement edge and the sealing element of the capsule are clamped substantially in a liquid-tight manner by the holder parts.
53. Assembly according to clause 52, in which the housing and the sealing element are perforated in the closed position of the capsule holder.
54. Use of a capsule according to one of clauses 1-45 in a device for preparing beverages.

The invention will be explained by means of the non-limiting illustrative embodiments shown in the figures below, in which.
- Fig. 1 shows a cross section of a capsule according to a first embodiment of the present invention;
- Fig. 2 shows a cross section of a capsule according to Fig. 1, provided with a protective layer;
- Fig. 3 shows a cross section of a capsule according to a second embodiment of the present invention;
- Fig. 4 shows a cross section of a capsule according to Fig. 3, provided with a protective layer;
- Fig. 5 shows a cross section of a housing according to a first embodiment of the present invention;
- Fig. 6 shows a cross section of a capsule according to Fig. 5, provided with a protective layer;
- Fig. 7 shows a cross section of a housing according to a second embodiment of the present invention;
- Fig. 8 shows a cross section of a capsule according to Fig. 7, provided with a protective layer;
- Fig. 9 diagrammatically shows a cross section of a capsule according to a first embodiment of the present invention, provided with a surface-mounted non-attached sealing ring;
- Fig. 10 diagrammatically shows a detail of the sealing ring in a non-attached position;
- Fig. 11 diagrammatically shows a cross section of a capsule according to a first embodiment of the present invention, provided with a surface-mounted attached sealing ring; and
- Fig. 12 diagrammatically shows a detail of the sealing ring in an attached position.

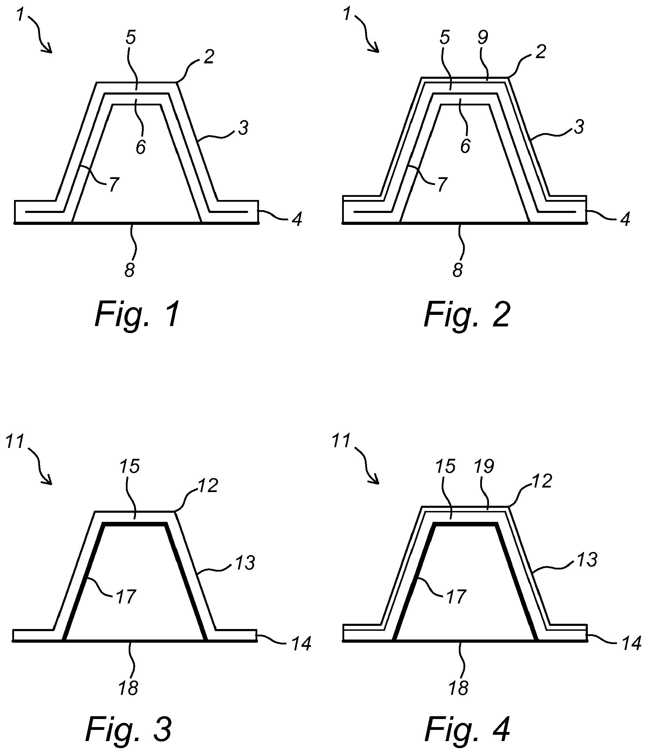

Fig. 1 shows a cross section of a capsule (1) according to a first embodiment of the present invention. The initially substantially closed capsule (1) comprises a housing (2) with a frustoconical peripheral wall (3) and a laterally projecting engagement edge or flange (4) which adjoins the frustoconical peripheral wall (3). This housing (2) is, for example, filled with coffee (not shown) and forms the basis of the capsule (1).

The housing (2) is manufactured, for example, by means of a co-injection technique, as a result of which the housing (2) is composed of an (integrated) laminate of two material layers (5, 6) made of PLA, between which a material layer (7) made of PVOH is arranged. This construction is completely compostable. Preferably, the PLA layers (5,6) are in the amorphous state. In this case, the PLA layers (5,6) enclose the PVOH layer (7) completely. The PLA layers (5, 6) act mainly as a moisture barrier, whereas the PVOH layer (7) acts as an oxygen barrier.

A(n) (under)side of the engagement edge (4) is attached to a substantially compostable film/foil (8) in order to enclose the coffee in a substantially medium-tight manner in the housing (2). The film/foil (8) is preferably also impermeable to water and oxygen. To this end, the film/foil (8) may be composed of several layers of film/foil.

Fig. 2 diagrammatically shows the cross section of a capsule (1) according to Fig. 1. In addition, the capsule (1) is provided with a protective layer (9) of cellulose which is provided on the outer PLA layer (5). This protective layer (9) forms an additional oxygen barrier and moisture barrier to protect the coffee in the capsule (1).

Fig. 3 shows a cross section of a capsule (11) according to a second embodiment of the present invention. The initially substantially closed capsule (11) comprises a housing (12) with a frustoconical peripheral wall (13) and a laterally projecting engagement edge or flange (14) which adjoins the frustoconical peripheral wall (13). This housing (12) is, for example, filled with coffee (not shown) and forms the basis of the capsule (11) and is composed of a layered structure having a PLA layer (15) on the outer side and a material layer (17) made of PVOH on the inner side. This compound is completely compostable. Preferably, the PLA layer (15) is in the amorphous state.

A(n) (under)side of the engagement edge (14) is attached to a substantially compostable film/foil (18) in order to enclose the coffee in a substantially medium-tight manner in the housing (12). The film/foil (18) is preferably also impermeable to water and oxygen. To this end, the film/foil (18) may be composed of several layers of film/foil.

In this case, the PLA layer (15) and the film/foil (18) together enclose the PVOH layer (17) completely. The PLA layer (15) and the film/foil (18) act mainly as a moisture barrier, whereas the PVOH layer (17) acts as an oxygen barrier.

Fig. 4 diagrammatically shows the cross section of a capsule (11) according to Fig. 3. In addition, the capsule (11) is provided with a protective layer (19) of cellulose which is provided on the outer PLA layer (15). This protective layer (19) forms an additional oxygen barrier and moisture barrier to protect the coffee in the capsule (11).

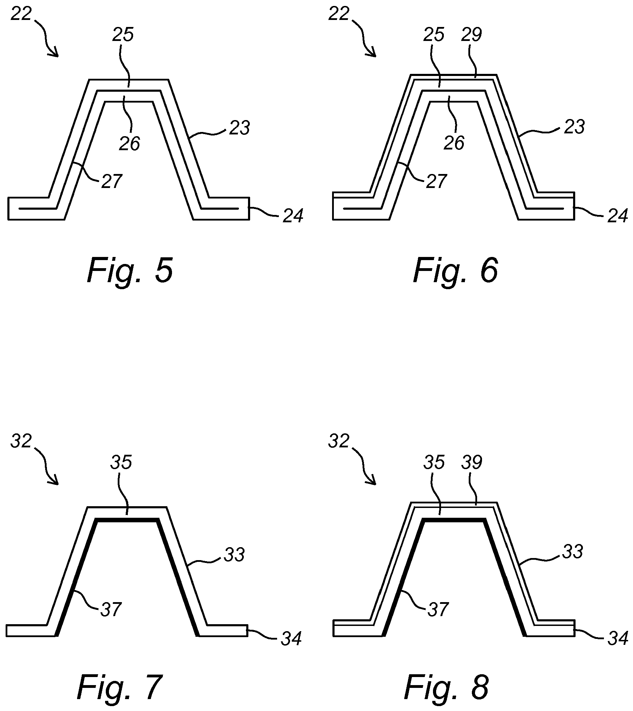

Fig. 5 diagrammatically shows a cross section of a housing (22) according to a first embodiment of the present invention. The housing (22) is provided with a frustoconical peripheral wall (23) and a laterally projecting engagement edge or flange (24) which adjoins the frustoconical peripheral wall (23).

The housing (22) is, for example, made by means of a co-injection technique, as a result of which the housing (22) is composed of a(n) (integrated) laminate of two material layers (25, 26) made of PLA, between which a material layer (27) made of PVOH is arranged. This construction is completely compostable. Preferably, the PLA layers (25, 26) are in the amorphous state. In this case, the PLA layers (25,26) enclose the PVOH layer (27) completely. The PLA-layers (25, 26) act mainly as a moisture barrier, whereas the PVOH layer (27) acts as an oxygen barrier.

Fig. 6 diagrammatically shows the cross section of a housing (22) according to Fig. 5. In addition, the housing (22) is provided with a protective layer (29) of cellulose which is provided on the outer PLA layer (25). This protective layer (29) forms an additional oxygen barrier and moisture barrier to protect the coffee in the housing (22).

Fig. 7 shows a cross section of a housing (32) according to a second embodiment of the present invention. The housing (32) is provided with a frustoconical peripheral wall (33) and a laterally projecting engagement edge or flange (34) which adjoins the frustoconical peripheral wall (33). This housing (32) is composed of a layered structure having a PLA layer (35) on the outer side and a material layer (37) made of PVOH on the inner side. This construction is completely compostable. Preferably, the PLA layer (35) is in the amorphous state.

Fig. 8 diagrammatically shows the cross section of a housing (32) according to Fig. 7. In addition, the housing (32) is provided with a protective layer (39) of cellulose which is provided on the PLA layer (35). This protective layer (39) forms an additional oxygen barrier and moisture barrier to protect the coffee in the housing (32).

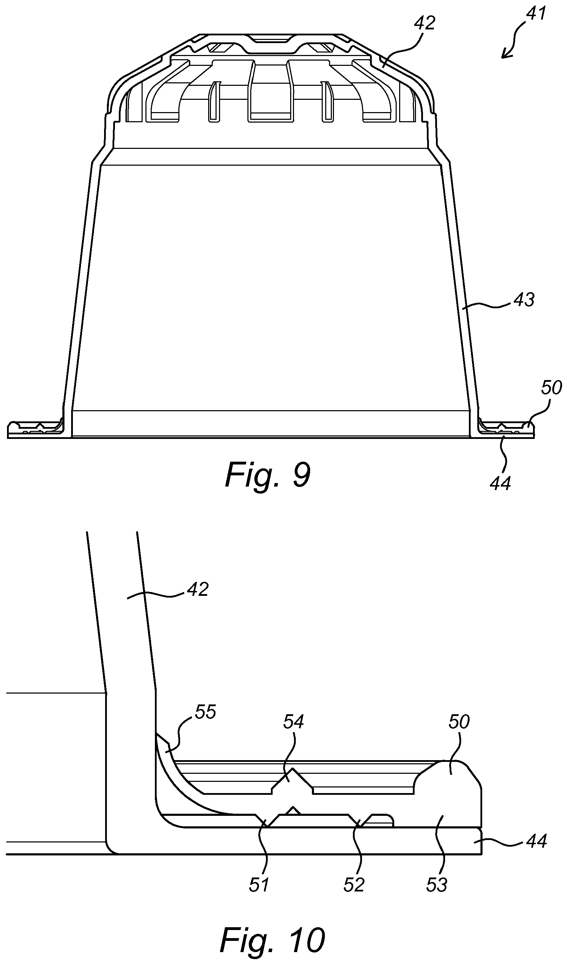

Fig. 9 diagrammatically shows a cross section of a capsule (41) according to the first embodiment of the present invention. The capsule (41) comprises a housing (42) with a frustoconical peripheral wall (43) and a laterally projecting engagement edge or flange (44) which adjoins the frustoconical peripheral wall (43). This housing (42) is, for example, filled with coffee (not shown) and forms the basis of the capsule (41). On the top side of the engagement edge (44), the housing (42) is attached to a surface-mounted sealing ring (50). The sealing ring (50) is made of amorphous PLA provided with one or more additives, such as talc, and is thus substantially completely compostable. The sealing ring (50) is not yet attached to the engagement edge (44).

Fig. 10 diagrammatically shows a detail of the sealing ring (50) and the engagement edge (44) in the non-attached position. On the underside of the ring (50), weld seams (51, 52) are present which can be welded together with the engagement edge (44). The outer peripheral edge (53) of the ring (50) is situated on the engagement edge (44) and can also be welded together with the engagement edge (44). The sealing ring (50) is also provided with an upright circular water-retaining edge (54) which further improves the sealing effect. An inner peripheral edge (55) of the sealing ring (50) is not connected to the housing (42) and extends upwards. This facilitates folding of the sealing ring (50) when the capsule (41) is being clamped into a capsule holder, thus benefitting the sealing capacity of the sealing ring (50).

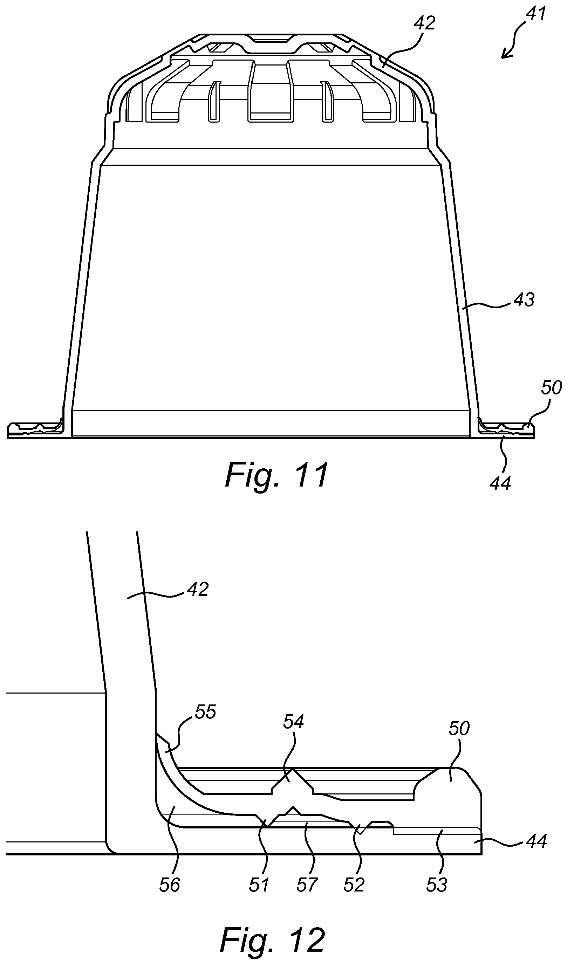

Fig. 11 diagrammatically shows a cross section of a capsule (41) according to the first embodiment of the present invention and according to Fig. 9, in which the sealing ring (50) is welded to the engagement edge (44).

Fig. 12 diagrammatically shows a detail of the sealing ring (50) and the engagement edge (44) in the attached position. The sealing ring (50) is fused to the engagement edge (44) by means of a weld seam (52). The outer peripheral edge (53) of the ring (50) is also welded to the engagement edge (44). At least two air chambers (56, 57) are situated between the sealing ring (50) and the engagement edge (44) of the capsule (41), one between the free end (55) and the engagement wall (44) and one between the two weld seams (51, 52). At the location of the air chambers (56, 57), the sealing ring (50) is more resilient and there is space for the sealing ring (50) to move in the direction of the flange (44). In this way, the sealing ring (50) can adapt better to the shape of a capsule holder (not shown) of a coffee machine.

The use of the capsule for preparing coffee can be described as follows. The capsule (41) is positioned clamped in an open capsule holder (not shown), after which the capsule holder is closed. During closing of the capsule holder, the engagement edge (44) and the sealing ring (50) attached thereto are clamped. In the course of clamping, the end side will be perforated by perforation elements of the capsule holder and the sealing ring (50) made from amorphous PLA will partly shape around a clamping edge of the capsule holder, thus creating a seal. Thereafter, hot water at a temperature of approximately 95°C is passed into the capsule holder and into the capsule (41) via the end side. As a result of this increase in pressure, the film/foil (not shown) will bulge and will be perforated by a perforation plate which forms part of the capsule holder, as a result of which coffee can be passed out of the capsule (41) and can be collected in the cup.

During this extraction process, the sealing ring (50) will partly crystallize to a semicrystalline state due to a "cold crystallization". In addition, the ring (50) will become slightly rubbery above the glass transition temperature (Tg) of PLA of approximately 55-60°C, which benefits the sealing effect. After the extraction process, the temperature of the sealing ring (50) will drop below the abovementioned glass transition temperature relatively quickly, as a result of which a relatively stiff, semicrystalline sealing ring (50) is obtained. Due to the increased stiffness compared to the initial amorphous state, the sealing ring (50), and thus the capsule (41), can be removed relatively easily from the capsule holder.

It will be clear that the invention is not limited to the illustrative embodiments illustrated and described herein, but that countless variants are possible without departing from the scope of the attached claims which will be obvious to the person skilled in the art.

## Claims

1. Annular sealing element for use in a capsule capsule for preparing beverages, said capsule preferably comprising:
- a substantially closed housing which is at least partly filled with a substance to be extracted and/or to be dissolved, such as ground coffee, for preparing a beverage, in which the housing is substantially closed, in which the housing is at least defined by a peripheral wall, an end side connected to the peripheral wall, and a laterally projecting engagement edge which is connected to the peripheral wall at a distance from the end side for enabling the capsule to be clamped in a capsule holder of a device for preparing beverages; and
- at least one substantially closed sealing element which is connected to the laterally projecting engagement edge for enclosing the substance in the capsule in a preserving manner,
in which the capsule is substantially completely compostable, and in which the housing comprises at least one barrier layer, which barrier layer is substantially impermeable to oxygen, and in which the housing comprises at least one material layer surrounding the barrier layer, in which the at least one surrounding material completely protects the barrier layer from the atmosphere surrounding the capsule,
said annular sealing element being a substantially compostable annular sealing element which is preferably attached to the engagement edge and configured to substantially seal a space between the capsule and a device for preparing beverages while the capsule is clamped in the device.

2. Annular sealing element according to Claim 1, in which the sealing element is at least partly made from at least one compostable polyester, in particular a polylactic acid (PLA).

3. Annular sealing element according to Claim 2, in which the sealing element comprises between 80 and 90% by weight of PLA.

4. Annular sealing element according to Claim 2 or 3, in which the sealing element is at least partly made from an amorphous polylactic acid (PLA).

5. Annular sealing element according to Claim 4, in which the amorphous structure is obtained by injection-moulding the PLA at relatively low temperatures of between 20 and 40°C, preferably of between 25 and 30°C.

6. Annular sealing element according to one of Claims 2-5, in which the sealing element is at least partly made from a composite material which comprises (i) at least one compostable polyester, in particular a polylactic acid (PLA), preferably an amorphous polylactic acid (PLA), and (ii) at least one elastomer based on thermoplastic copolyester (TPC).

7. Annular sealing element according to one of the foregoing Claims, in which the sealing element is at least partly made of an elastomer based on compostable thermoplastic copolyester (TPC).

8. Annular sealing element according to Claim 7, in which the sealing element comprises between 10 and 20% by weight of TPC.

9. Annular sealing element according to one of the foregoing Claims, in which the sealing element is provided with talc.

10. Annular sealing element according to one of the foregoing Claims, in which the sealing element is provided with reinforcing fibres, in particular reinforcing inorganic fibres.

11. Annular sealing element according to one of the foregoing Claims, in which at least a part of the annular sealing element is fused with the engagement edge of the capsule.

12. Annular sealing element according to one of Claims 11, in which only an outer edge of the annular sealing element is fused with the engagement edge, and in which an inner edge is not directly connected to the annular sealing element.

13. Annular sealing element according to Claim 12, in which a part of the sealing element is situated at a distance from the engagement edge.

14. Annular sealing element according to one of the foregoing Claims, in which the width of the sealing element substantially corresponds to the width of the engagement edge.

15. Capsule for preparing beverages, provided with an annular sealing element according to one of Claims 1-14,
wherein said capsule preferably comprising:
- a substantially closed housing which is at least partly filled with a substance to be extracted and/or to be dissolved, such as ground coffee, for preparing a beverage, in which the housing is substantially closed, in which the housing is at least defined by a peripheral wall, an end side connected to the peripheral wall, and a laterally projecting engagement edge which is connected to the peripheral wall at a distance from the end side for enabling the capsule to be clamped in a capsule holder of a device for preparing beverages; and
- at least one substantially closed sealing element which is connected to the laterally projecting engagement edge for enclosing the substance in the capsule in a preserving manner,
in which the capsule is substantially completely compostable, and in which the housing comprises at least one barrier layer, which barrier layer is substantially impermeable to oxygen, and in which the housing comprises at least one material layer surrounding the barrier layer, in which the at least one surrounding material completely protects the barrier layer from the atmosphere surrounding the capsule;
and wherein said annular sealing element being a substantially compostable annular sealing element which is attached to the engagement edge and configured to substantially seal a space between the capsule and a device for preparing beverages while the capsule is clamped in the device.
